# EUROPÄISCHE PATENTSCHRIFT

(11) **EP 0 990 829 B1**
(45) Veröffentlichungstag und Bekanntmachung des Hinweises auf die Patenterteilung: **15.01.2003**
(21) Anmeldenummer: 98118680.2
(22) Anmeldetag: 02.10.1998
(51) Int. Cl.: F16L 27/10

(54) **Antivibrations-Stecknippel**
Anti-vibration connector
Connecteur antivibration

(43) Veröffentlichungstag der Anmeldung: 05.04.2000
(73) Patentinhaber: Hans Oetiker AG Maschinen- und Apparatefabrik, 8812 Horgen (CH)
(72) Erfinder: Oetiker, Hans, 8812 Horgen (CH)
(74) Vertreter: Troesch Scheidegger Werner AG

(56) Entgegenhaltungen:
- CH-A- 518 481
- DE-C- 888 786

## Beschreibung

Die vorliegende Erfindung betrifft einen Antivibrations-Stecknippel für schlagende Werkzeuge zum Dämpfen der Pulsationen, Vibrationen und schlagenden Bewegungen sowie ein Verfahren zum Dämpfen bzw. Absorbieren von Pulsationen, Vibrationen und schlagenden Bewegungen beim Betreiben von schlagenden und/oder vibrierenden, pneumatisch oder hydraulisch betriebenen Werkzeugen.

Ahnliche Antivibrations-Vorrichtungen sind beispielsweise aus der CH-A-518 481 bekannt. Stecknippel werden in Verbindung mit Verbindungskupplungen verwendet, welche als wieder lösbare Anschlüsse zwischen starren Leitungen und flexiblen Leitungen für flüssige oder gasförmige Medien dienen, wie insbesondere Druckluft. Bei pneumatisch oder hydraulisch betriebenen Werkzeugen, wie beispielsweise schlagenden oder vibrierenden Werkzeugen, bei welchen pneumatische oder hydraulische Medien, wie Druckluft, verwendet werden, erfolgt das Anschliessen und Wiederentfernen dieser Werkzeuge an Versorgungsleitungen unter Verwendung der erwähnten Verbindungskupplungen. Beispielsweise bei Druckluftwerkzeugen im Strassenbau, Pressluftwerkzeugen zum Anziehen und Wiederentfernen von Schrauben bei Automobilrädern und dergleichen, werden hohe Vibrationskräfte bzw. Pulsationen oder schlagende Bewegungen vom schlagenden Werkzeug über die starre Verbindungsleitung an die Verbindungskupplung übertragen, in welcher Kupplung der Stecknippel gesichert festgelegt ist. Dabei ist der Stecknippel mittels eines Eingriffabschnittes in einer entsprechenden Aufnahme in der Kupplung wieder lösbar festgehalten, wobei dieses Festhalten entweder mittels Drehverschluss, Schwenkbewegung in der Verbindungskupplung usw. erreicht werden kann.

Hersteller von Schnellverschlusskupplungen und Stecknippeln beschäftigt die Tatsache, dass die Anwender in den genannten Kupplungen und Stecknippeln lediglich Verbindungselemente sehen, die einem Verschleiss unterliegen und deshalb periodisch ausgetauscht werden müssten. Je nach qualitativer Beschaffenheit und Materialauswahl der Teile wird der physische Einsatz zeitlich begrenzt, und der Anwender prüft bis dato lediglich das Kosten-Kosten-/Nutzenverhältnis seiner Investitionen für Kupplungen und Stecknippel. Unsere Erfahrungen aus den verschiedensten Anwendungsgebieten für Kupplungen und Stecknippel haben jedoch deutlich bewiesen, dass solche Verbindungselemente am häufigsten für die Druckluftversorgung von pneumatisch betriebenen Werkzeugen eingesetzt werden und sehr oft auch an sogenannten vibrierenden Schrauben und Hämmern. Die damit unmittelbar verbundene überdurchschnittliche Abnutzung wird jedoch vom Normalverbraucher solange ausser Acht gelassen, bis die Funktionstüchtigkeit der Kupplung nicht mehr gegeben ist. Diese Funktionsuntüchtigkeit macht sich in den meisten Fällen dadurch bemerkbar, dass sich kuppelbare Verbindungen von selbst lösen und die beiden Verbindungselemente von z.B. einer Schlauchleitung als Kupplung und Stecknippel unkontrollierbar werden, indem sie sich durch den plötzlich frei werdenden Druckluftaustritt mit einem sogenannten "Peitscheneffekt" trennen und entsprechend frei beschleunigen. Durch diesen Umstand werden Unfälle mit schwersten Folgeerscheinungen für die unmittelbar Betroffenen ausgelöst, für deren Ursache auch Hersteller von Kupplungen und Stecknippeln belangt werden können.

Bis dato regeln wohl gewisse nationale und internationale Richtlinien den Umgang mit Druckluft, indem eine Kupplung gewisse Sicherheitsbedingungen beim Kuppeln und Entkuppeln zu erfüllen hat, um als sogenannte Sicherheitskupplung in den öffentlichen Umlauf gebracht zu werden. Es besteht aber keine vergleichbare Regelung über die technische Ausführung von solchen Verbindungselementen, insbesondere was für technische Vorkehrungen getroffen werden können, um einer vorzeitigen und für den Nichtfachmann kaum feststellbaren Abnutzung der Verriegelungsorgane vorzubeugen.

Zur Lösung dieses Problems wurde im Stand der Technik vorgeschlagen, zwischen dem Stecknippel und dem Anschluss an das Werkzeug einen flexiblen Leitungsabschnitt vorzusehen, wobei aber die Auslegung der flexiblen Leitung wie auch das Befestigen sowohl am Stecknippel wie an der Verbindung zum Werkzeug derart kompliziert und kostenintensiv war, dass dieser Vorschlag praktisch nie realisiert worden ist.

Weiter bekannt ist ein zweiteiliger Stecknippel aufweisend eine dämpfende elastische Zwischenschicht, wobei diese Elastschicht mittels einer Hülse ummantelt ist, welche zum Erzeugen von radial einwärts gerichteten Kräften auf das Elastomermaterial geschrumpft wurde. In der Praxis hat diese Konstruktion rasch zu Ermüdungserscheinungen bzw. Versprödung des Elastomermaterials und damit zum Auseinanderbrechen des Nippels geführt.

Es ist daher eine Aufgabe der vorliegenden Erfindung, eine Anordnung vorzuschlagen, mittels welcher die erwähnten Pulsationen, Vibrationen und schlagenden Bewegungen gedämpft bzw. absorbiert werden, damit diese nicht auf die Verbindungskupplung übertragen werden und zu einem Ausbrechen des Stecknippels aus der Kupplung führen können.

Im speziellen besteht die Aufgabe der vorliegenden Erfindung im Schaffen eines sogenannten "Antivibrations-Nippels", der grundsätzlich in seiner technischen Ausführung so gestaltet ist, dass vom schlagenden und/oder vibrierenden beispielsweise Druckluftwerkzeug keine oder nur stark gedämpfte Bewegungen auf die Kupplung übertragen werden können. Wenn keine Vibrationen oder Schläge auf die Kupplung gelangen, werden die Verriegelungsorgane in der Kupplung nicht ständig übermässig beansprucht und unterliegen somit keinem ausserordentlichen Verschleiss, der sich im Normalfall erst dann bemerkbar macht, wenn die vom Anwender als sicher erwartete Verbindung unbeabsichtigt undicht wird oder sich schlussendlich gar löst.

Die erfindungsgemäss gestellte Aufgabe wird mittels einer Vorrichtung gemäss dem Wortlaut nach Anspruch 1 gelöst.

Weitere bevorzugte Ausführungsvarianten der erfindungsgemässen Vorrichtung bzw. des Stecknippels sind in abhängigen Ansprüchen charakterisiert.

Der vorgängig beschriebene Antivibrations-Nippel verlängert die Lebensdauer von Steckverbindungen, da die Verriegelungsorgane nur beim Ein- und Auskuppeln beansprucht werden, was einer normalen Abnutzungserscheinung gleichkommt. Der genannte Nippel kann grundsätzlich für alle bestehenden Stecksysteme und Kupplungstypen eingesetzt werden, da die Stecknippelseite dem jeweiligen Stecksystem angepasst werden kann.

Für die Herstellung der erfindungsgemässen Vorrichtung bzw. des eben beschriebenen Antivibrations-Nippels ist es möglich, die beiden Metallteile je mit einem zylinderartigen oder hülsenartigen Abschnitt zu versehen, wobei der eine hülsenartige Abschnitt radial den anderen Abschnitt umgreifend angeordnet wird. In den zwischen den beiden hülsenartigen Abschnitten entstehenden Hohlraum kann nun das Elastomermaterial bzw. der Gummi eingegossen oder eingespritzt werden und ggf. durch anschliessende Vulkanisierung auf eine gewünschte Shore-Härte eingestellt werden. Es ist aber auch möglich, über den inneren hülsenartigen oder zylinderartigen Abschnitt das Elastomermaterial bzw. den Gummi aufzuextrudieren und anschliessend den anderen Abschnitt darüber aufzuschieben. Auch in diesem Falle ist es gegebenenfalls möglich, beispielsweise durch Tempern oder mittels anderer geeigneter Massnahmen, eine teilweise Vernetzung oder Vulkanisation im Elastomer- oder Gummimaterial auszulösen, um eine gewünschte Shore-Härte einzustellen.

Die Erfindung wird nun anschliessend beispielsweise und unter Bezug auf die beigefügten Figuren näher erläutert. Dabei zeigen:
- Fig. 1:: eine erfindungsgemässe Vorrichtung bzw. einen Anschluss-Stecknippel im Längsschnitt,
- Fig. 2:: einen Antivibrations-Nippel analog der Konstruktion aus Fig. 1 anhand eines konkreten Ausführungsbeispieles, wiederum teilweise aufgeschnitten, und
- Fig. 3:: schematisch, in Perspektive, ein mittels eines erfindungsgemässen Antivibrations-Anschlussnippels an eine Schnellverschlusskupplung angeschlossenes schlagendes Werkzeug.

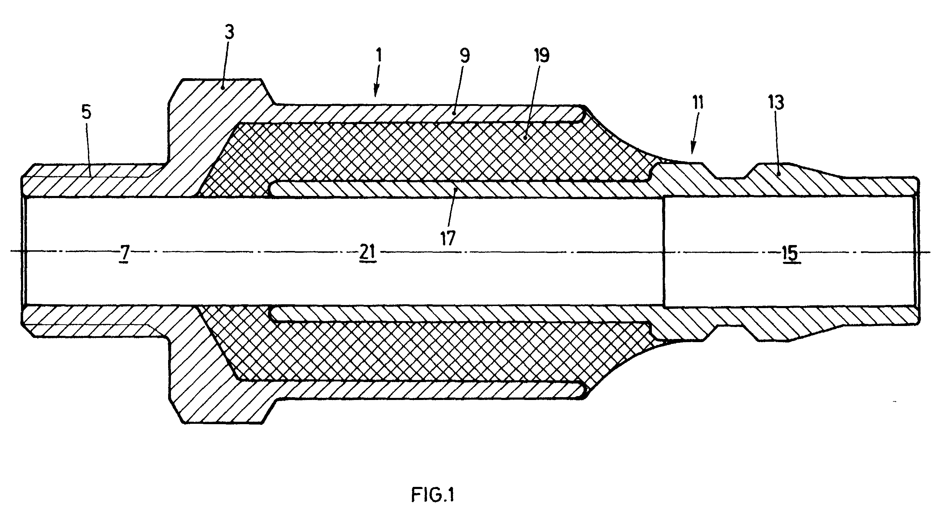

In Fig. 1 ist im Längsschnitt eine erfindungsgemässe Vorrichtung bzw. ein Antivibrations-Nippel 1 dargestellt, geeignet zum Anschliessen eines hydraulisch oder pneumatisch betriebenen Werkzeuges an eine Verbindungskupplung, um das Werkzeug an einer Anschluss- bzw. Transportleitung anzuschliessen, in welcher das flüssige oder gasförmiger Medium zum Betreiben des Werkzeuges geführt wird.

Der erfindungsgemässe Anschlussnippel 1 weist ein Anschlussteil 3 auf, aufweisend einen Anschlussabschnitt 5, vorgesehen, um mit dem Werkzeug verbunden zu werden. Beim Abschnitt 5 kann es sich um ein Gewinde, einen Bajonettverschluss, eine Einschnappvorrichtung und dergleichen handeln, um den Anschlussnippel 1 fest mit dem Werkzeug zu verbinden. Weiter weist das Anschlussteil 3 einen hülsenartig oder zylinderartig ausgebildeten Abschnitt 9 auf, welcher einen innenliegenden, zylinderartigen Abschnitt 17 aussen umhüllt, welcher am Einsteckteil 11 ausgebildet ist. Das Teil 11 weist weiter einen nippelartig ausgebildeten Einsteckabschnitt 13 auf, vorgesehen, um in einer Aufnahme bzw. einem Kupplungsgehäuse der Verbindungskupplung eingeführt zu werden. Der Einsteck- oder Nippelabschnitt 13 ist so ausgebildet, dass er mittels Verriegelungsorganen in der Aufnahme bzw. dem Kupplungsgehäuse fest gehalten werden kann. Auf das Festlegen des Stecknippels in der Kupplung soll an dieser Stelle nicht weiter eingegangen werden, da es verschiedene Ausführungen derartiger Kupplungen gibt, in welche durch Einstecken, Einschnappen mittels Schwenk- oder Rotationsbewegungen, mittels Bajonettverschluss und dergleichen eine feste, wieder lösbare Verbindung zwischen Nippel und Kupplung herstellbar ist.

Erfindungswesentlich ist nun, dass die beiden zylinderartigen bzw. hülsenartigen Abschnitten 9 und 17, zwischen welchen ein ringförmiger bzw. wiederum hülsenartiger Raum ausgebildet ist, über ein Elastomermaterial bzw. eine Elastomerschicht 19 miteinander verbunden sind. Diese Elastomerschicht, bestehend aus einem elastomeren Polymer oder einem gummiartigen Material, ist dazu geeignet, Vibrationen bzw. Pulsationen oder schlagende Bewegungen, welche vom Werkzeug aus über den Anschlussabschnitt 5 auf den Anschlussnippel 1 übertragen werden, wenigstens teilweise zu absorbieren bzw. zu dämpfen. Damit wird verhindert, dass die schlagende Bewegung bzw. die Vibrationen vom Werkzeug über den Einsteckabschnitt 13 auf die Kupplung übertragen werden, was zu Beschädigungen in der Kupplung führen kann, mit dem Resultat, dass die Verbindung zwischen Stecknippel 1 und Kupplung undicht wird und schlussendlich gar zum Ausbrechen des Einsteckabschnittes 13 aus der Kupplung führt.

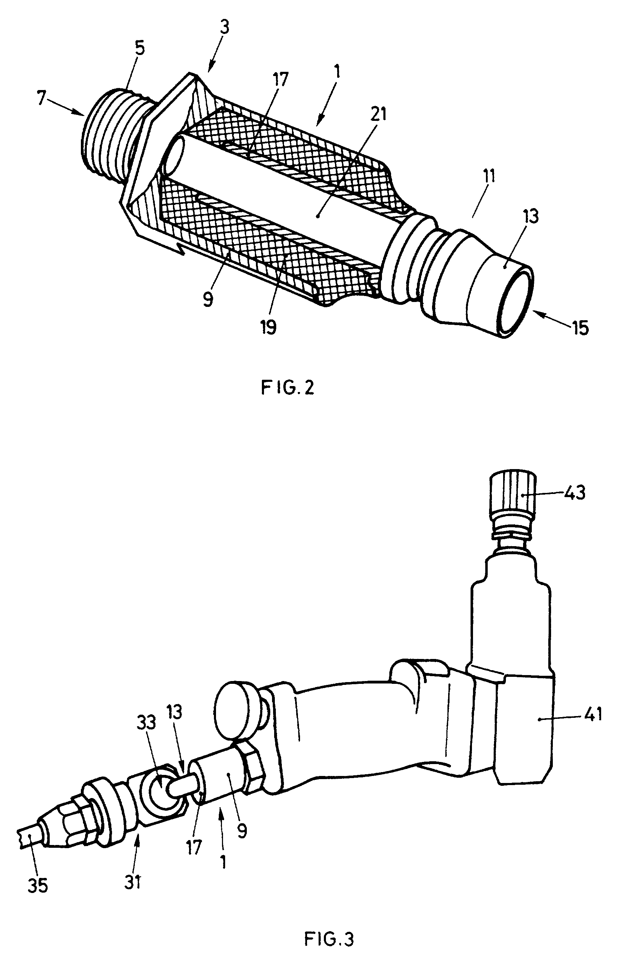

In Fig. 2 ist eine konkrete Ausführungsform eines erfindungsgemässen Antivibrations-Nippels 1 dargestellt, wobei zu Fig. 1 analoge Teile mit denselben Bezugszeichen bezeichnet sind. Deutlich erkennbar ist das zwischen den beiden zylinderartigen bzw. hülsenartigen Abschnitten 9 und 17 ausgebildete elastomerartige bzw. gummiartige Material 19 zum Dämpfen bzw. Absorbieren der schlagenden Bewegungen bzw. Vibrationen. Ebenfalls gut erkennbar ist die mittige, durchgehende Bohrung 21, welche sich von der Öffnung 7 im Anschlussabschnitt 5 bis zur Öffnung 15 im Einsteckteil 13 durch den Antivibrations-Nippel 1 hindurch erstreckt. Durch diese Bohrung 21 hindurch wird das hydraulische bzw. pneumatische Medium geführt zum Antreiben des Werkzeuges.

Der Antivibrations-Nippel 1 gemäss Fig. 2 kann beispielsweise aus zwei Metallteilen 3 und 11 sowie einem einvulkanisierten Gummi mit einer vorgegebenen Shore-Härte, wie beispielsweise einer Shorehärte von ca. 50 - 55, bestehen. Das Metallteil 3 weist am Anschlussabschnitt 5 ein Aussen- oder Innengewinde auf, das in die entsprechende Gewindeöffnung des Werkzeuges geschraubt wird. Das andere Metallteil 11 besteht aus dem inneren hülsenartigen oder zylindrischen Teil 17 sowie dem anderen Ende 13, ausgebildet in Stecknippelform. Die beiden Teile werden durch den Vulkanisationsvorgang fest, aber flexibel miteinander verbunden, so dass Vibrationen und/oder Schläge nicht auf die Kupplung übertragen werden können. Die beschriebene Konstruktionsweise verhindert, dass der Antivibrations-Nippel durch seitliche Kräfte überbeansprucht wird. Das gewählte Elastomermaterial bzw. die Gummiqualität, die Shore-Härte sowie auch die Baulänge des Antivibrations-Nippels bestimmen insgesamt dessen Wirkungsweise als sogenannter Stossdämpfer zwischen Werkzeug und Kupplung.

Zum besseren Verständnis der vorliegenden Erfindung ist in Fig. 3 ein an eine Schnellverschlusskupplung angeschlossenes schlagendes Werkzeug in perspektivischer Ansicht dargestellt. Beim Druckluftwerkzeug 41 kann es sich beispielsweise um einen Schlagschrauber handeln, aufweisend einen schlagschraubenden Mechanismus 43 zum Anbringen von Befestigungsschrauben beim Montieren von Autorädern. Am Werkzeug angeschlossen ist der aus Fig. 2 bekannte Antivibrations-Nippel 1, aufweisend die beiden hülsenartigen oder zylinderartigen Abschnitte 9 und 17, welche über das beispielsweise einvulkanisierte Gummimaterial miteinander verbunden sind.

Über den Stecknippelabschnitt 13 ist der Antivibrations-Nippel 1 mit einer Schnellverschlusskupplung 31 verbunden, wobei der Stecknippel in einem Kupplungsgehäuse 33 mittels Verriegelungsorganen festgelegt ist. Bei der in Fig. 3 dargestellten Schnellverschlusskupplung 31 handelt es sich um eine Schwenkkupplung, bei welcher der Stecknippel senkrecht zur Längsachse der Kupplung in das Kupplungsgehäuse 33 eingeführt wird und anschliessend durch Schwenkung um 90° die Verriegelungsorgane den Stecknippel in axialer Position festhalten. Nach erfolgter Verriegelung kann nun das in der Transportleitung 35 geführte Medium, wie beispielsweise Druckluft, auf das Druckluftwerkzeug übertragen werden.

In Vibrationstests wurden herkömmliche Stecknippel, sowohl ohne als auch mit Absorptions- bzw. Dämpfungsmitteln mit Antivibrations-Nippeln gemäss der vorliegenden Erfindung verglichen. Stecknippel ohne dämpfende Mittel waren bereits nach 125 Std. Testdauer defekt bzw. die Leckage war derart gravierend, dass der Stecknippel unbrauchbar war. Stecknippel mit dämpfenden Mitteln, wie im Stand der Technik beschrieben, d.h. bei welchen mittels eines Schrumpfringes das Elastomermaterial beaufschlagt ist, waren nach 134 Std. defekt bzw. unbrauchbar. Im Gegensatz zum Stecknippel ohne Dämpfungsmittel, bei welchem die Leckage im Bereich des Kupplungsgehäuses infolge abgenutzter Verriegelungsorgane festgestellt wurde, führte die testmässige Belastung der Nippel mit Dämpfungsmitteln zum Abreissen im Bereiche des flexiblen Materials.

Demgegenüber konnten die Vibrationstests für die Antivibrations-Nippel gemäss der vorliegenden Erfindung nach 210 Std. abgebrochen werden, ohne dass irgendwelche Leckagen festgestellt werden konnten.

Die Beschreibung unter Bezug auf die Fig. 1 bis 3 dient lediglich dem besseren Verständnis der vorliegenden Erfindung und stellt somit lediglich beispielsweise eine mögliche Ausführungsform dar, welche nicht als Einschränkung für die vorliegende Erfindung zu betrachten ist. Insbesondere die in Fig. 3 dargestellte Schnellverschlusskupplung soll lediglich dazu dienen, anhand eines Beispieles darzulegen, wie ein erfindungsgemässer Stecknippel mit der Kupplung verbunden werden kann. Insbesondere für die Erzeugung der elastischen, dämpfenden bzw. absorbierenden Schicht können die verschiedensten Elastomere, wie verschiedene Elastomer-Polymere, verwendet werden oder gummiartige Materialien, wie die bevorzugt angeführten aufvulkanisierten Gummimaterialien. Auch die Materialwahl der beiden durch das Elastmaterial verbundenen Teile ist an sich unwesentlich, dafür kommen rostfreier Stahl, Aluminium oder andere geeignete metallene Werkstoffe in Frage.

Wesentlich beim erfindungsgemäss vorgeschlagenen Stecknippel ist, dass das die beiden festen Konstruktionsteile verbindende Elastmaterial nicht beispielsweise durch Aufschrumpfen eines Metallringes bzw. einer Metallhülse kraftbeaufschlagt ist, sondern erhalten wird durch Giessen, Spritzen oder Extrudieren des elastomeren Materials bzw. Gummis und ggf. anschliessendem Aufvulkanisieren oder teilweise Vernetzen.

## Patentansprüche

1. Antivibrations-Nippel (1) zum Anschliessen bzw. zum Verbinden eines schlagenden bzw. vibrierenden, pneumatisch oder hydraulisch betriebenen Werkzeuges mit einer Verbindungskupplung wie einer Schnellverschlusskupplung, geeignet, um das Werkzeug an eine flüssiges oder gasförmiges Medium führende Transportleitung (35) anzuschliessen, **gekennzeichnet durch** mindestens einen ersten Teil (11), aufweisend einen Eingriffsabschnitt (13), geeignet, um in eine Aufnahme (33) an der Verbindungskupplung einführbar mit dieser wieder lösbar verbunden zu werden, einen zweiten Teil (3), aufweisend einen Anschlussabschnitt (5), ausgebildet, um mit dem Werkzeug fest verbunden zu werden, wobei die beiden Teile (3, 11) je mindestens einen weiteren Abschnitt (9, 17) aufweisen, von welchen der eine weitere Abschnitt (9) den anderen radial beabstandet aussen umhüllt und wobei zwischen den beiden weiteren Abschnitten eine elastische Verbindung (19) vorgesehen ist, welche Verbindung **durch** ein elastisches, gummiartiges Material zwischen den beiden Abschnitten gebildet wird, welches **durch** Giesen, Einspritzen, Extrudieren und/oder ggf. Reaktionsvernetzen verarbeitbar ist und wobei die Durchgangsbohrung zwischen den beiden Teilen (3, 11) glattwandig ausgebildet ist.

2. Antivibrations-Nippel nach Anspruch 1, **dadurch gekennzeichnet, dass** die beiden Abschnitte hülsenartig bzw. zylinderartig ausgebildet sind, aufweisend einen inneren Zylinder bzw. eine Hülse (17) mit einem kleineren Durchmesser und eine äussere Hülse bzw. einen Zylinder (9), aufweisend einen grösseren Durchmesser und mindestens teilweise umhüllend den inneren Zylinder bzw. die innere Hülse.

3. Antivibrations-Nippel nach einem der Ansprüche 1 und 2, **dadurch gekennzeichnet, dass** der innere Zylinder bzw. die innere Hülse mit dem kleineren Durchmesser den weiteren Abschnitt (11) des ersten Teils (11) bildet.

4. Antivibrations-Nippel nach einem der Ansprüche 1 oder 2, **dadurch gekennzeichnet, dass** die innere Hülse bzw. der Zylinder mit dem kleineren Durchmesser den weiteren Abschnitt des zweiten Teiles bildet.

5. Antivibrations-Nippel nach einem der Ansprüche 1 bis 4, **dadurch gekennzeichnet, dass** das elastische gummiartige Material ein elastomeres Polymer ist.

6. Antivibrations-Nippel nach einem der Ansprüche 1 bis 4, **dadurch gekennzeichnet, dass** das elastische, gummiartige Material ein kautschukartiger Gummi ist.

7. Antivibrations-Nippel nach einem der Ansprüche 1 bis 6, **dadurch gekennzeichnet, dass** das elastische gummiartige Material wenigstens teilweise vernetzt und/oder aufvulkanisiert ist.

8. Verfahren zum Dämpfen von schlagenden Bewegungen bzw. Vibrationen eines hydraulisch oder pneumatisch betriebenen Werkzeuges, **dadurch gekennzeichnet, dass** zwischen dem Werkzeug und einer Verbindungskupplung zum Anschliessen des Werkzeuges an eine das flüssige oder gasförmige Medium führende Transportleitung eine Vorrichtung zwischengeschaltet wird, aufweisend mindestens zwei Teile mit dazwischen angeordnet einer aus einem elastisch gummiartigen Material hergestellten Verbindung, wobei zum Herstellen der Verbindung der Zwischenraum zwischen den beiden Teilen der Vorrichtung ein elastomeres Polymermaterial oder ein gummiartiges Material eingegossen, eingespritzt oder einextrudiert wird und anschliessend gegebenenfalls teilvernetzt oder aufpolymerisiert wird.

9. Verfahren nach Anspruch 8, **dadurch gekennzeichnet, dass** zum Einstellen der Dämpfung bzw. der Absorption der schlagenden Bewegung bzw. Vibration die elastische bzw. gummiartige Verbindung mit unterschiedlicher Shore-Härte versehen wird, beispielsweise durch Wahl unterschiedlicher polymerer Elastomermaterialien oder durch Wahl entsprechender gummiartiger Materialien und/oder unterschiedlichem Vernetzungs- bzw. Aufvulkanisationsgrad.

10. Verfahren zum Herstellen eines Antivibrationsnippels nach einem der Ansprüche 1 bis 8, **dadurch gekennzeichnet, dass** die elastische Verbindung (19) zwischen den beiden Abschnitten hergestellt wird, indem elastisches oder gummiartiges Material zwischen die beiden Abschnitte eingegossen, eingespritzt, einextrudiert wird und das Material ggf. anschliessend reaktionsvernetzt wird.

## Claims

1. An anti-vibration connector (1) for connecting a hammering or vibrating, pneumatically or hydraulically driven tool, comprising a connector coupling, such as a quick-acting coupling, adapted to connect the tool to a transport line (35) supplying a liquid or gaseous medium, **characterised by** at least one first part (11) having an engagement portion (13) adapted to be insertably connected to a socket (33) on the connector coupling and to be detachable therefrom, by a second part (3) having a connector portion (5) and configured to be rigidly connected to the tool, the two parts (3,11) each having at least one further section (9, 17), one of which further sections (9) surrounding the other at a radial distance therefrom and a resilient connection (19) being provided between the two further sections, which resilient connection is formed by an elastic, rubber-like material between said two sections and can be manufactured by means of casting, injection moulding, extrusion and/or optionally reaction cross-linking and the through-bore being configured to have a smooth wall between the two parts (3,11).

2. An anti-vibration connector according to Claim 1, **characterised in that** the two sections are configured in a sleeve-like or cylindrical manner and comprise an inner cylinder or sleeve (17) having a smaller diameter and an outer sleeve or cylinder (9) having a larger diameter and at least partially surrounding the inner cylinder or inner sleeve.

3. An anti-vibration connector according to one of claims 1 and 2, **characterised in that** the inner cylinder or inner sleeve having the smaller diameter forms the further section (17) of the first part (11).

4. An anti-vibration connector according to one of claims 1 or 2, **characterised in that** the inner sleeve or the cylinder with the smaller diameter forms the further section of the second part.

5. An anti-vibration connector according to one of claims 1 to 4, **characterised in that** the elastic rubber-like material is an elastomeric polymer.

6. An anti-vibration connector according to one of claims 1 to 4, **characterised in that** the elastic rubber-like material is a natural-rubber-like rubber.

7. An anti-vibration connector according to one of claims 1 to 6, **characterised in that** the elastic rubber-like material is attached at least partially by cross-linking and/or vulcanisation.

8. A method for damping percussive motions or vibrations of a hydraulically or pneumatically driven tool, **characterised in that** there is interposed between the tool and a connector coupling for connecting the tool to a transport line supplying a liquid or gaseous medium a device comprising at least two parts between which is arranged a connection manufactured from an elastic rubber-like material, whereby an elastomeric polymer material or a rubber-like material is cast, injection-moulded or extruded into the cavity between the two parts of the device to connect said two parts and is then optionally attached by partial cross-linking or polymerisation.

9. A method according to Claim 8, **characterised in that** for adjustment of the damping or absorption of the percussive motion or vibration the elastic or rubber-like connection is provided with different Shore hardnesses, for example by selecting different polymeric elastomer materials or by selecting corresponding rubber-like materials and/or different degrees of cross-linking or vulcanisation.

10. A method for manufacturing an anti-vibration connector according to one of claims 1 to 8, **characterised in that** the resilient connection (19) between the two sections is produced by casting, injection-moulding or extruding elastic or rubber-like material between the two sections, the material then being optionally reaction cross-linked.

## Revendications

1. Raccord antivibratoire (1) destiné à raccorder ou à assembler un outil de percussion ou un outil vibrant, actionné par voie pneumatique ou hydraulique, avec un dispositif de couplage, tel qu'un coupleur à fermeture rapide, destiné à raccorder l'outil à une conduite d'amenée (35) transportant un fluide liquide ou gazeux, **caractérisé par** au moins une première partie (11), comprenant un tronçon de prise (13) destiné à être inséré dans un logement (33) au niveau du dispositif de couplage et à être assemblé de manière amovible avec celui-ci, une deuxième partie (3) comprenant un tronçon de raccordement (5) conçu pour être assemblé de manière inamovible avec l'outil, les deux parties (3, 11) comportant chacune au moins un tronçon supplémentaire (9, 17), l'un des tronçons supplémentaires (9) enveloppant l'autre de l'extérieur à une distance radiale donnée, et un élément de jonction (19) élastique étant prévu entre les deux tronçons supplémentaires, lequel élément de jonction est formé dans un matériau élastique d'aspect caoutchouteux entre les deux tronçons et peut être réalisé par coulée, injection, extrusion et/ou, le cas échéant, par réticulation réactive, et la forure de communication entre les deux parties (3, 11) étant réalisée à paroi lisse.

2. Raccord antivibratoire selon la revendication 1, **caractérisé en ce que** les deux tronçons sont conçus sous forme de fourreau ou de cylindre, comprenant un cylindre intérieur ou un fourreau (17) avec un plus petit diamètre et un fourreau extérieur ou un cylindre (9) avec un plus grand diamètre et entourant au moins en partie le cylindre intérieur ou le fourreau intérieur.

3. Raccord antivibratoire selon l'une des revendications 1 et 2, **caractérisé en ce que** le cylindre intérieur ou le fourreau intérieur avec le plus petit diamètre forme le tronçon supplémentaire (17) de la première partie (11).

4. Raccord antivibratoire selon la revendication 1 ou 2, **caractérisé en ce que** le fourreau intérieur ou le cylindre avec le plus petit diamètre forme le tronçon supplémentaire de la deuxième partie.

5. Raccord antivibratoire selon l'une des revendications 1 à 4, **caractérisé en ce que** le matériau élastique d'aspect caoutchouteux est un polymère élastomère.

6. Raccord antivibratoire selon l'une des revendications 1 à 4, **caractérisé en ce que** le matériau élastique d'aspect caoutchouteux est une gomme d'aspect caoutchouteux.

7. Raccord antivibratoire selon l'une des revendications 1 à 6, **caractérisé en ce que** le matériau élastique d'aspect caoutchouteux est au moins en partie réticulé et/ou vulcanisé.

8. Procédé destiné à amortir des mouvements de percussion ou de vibration d'un outil actionné par voie hydraulique ou pneumatique, **caractérisé en ce que**, entre l'outil et un dispositif de couplage, destiné à raccorder l'outil à une conduite d'amenée transportant un fluide liquide ou gazeux, est intercalé un dispositif formé par au moins deux parties, entre lesquelles est disposé un élément de jonction réalisé dans un matériau élastique d'aspect caoutchouteux, sachant que pour la réalisation de l'élément de jonction, un polymère élastomère ou un caoutchouc est coulé, injecté ou extrudé dans l'intervalle entre les deux parties du dispositif et, le cas échéant, est ensuite réticulé en partie ou polymérisé.

9. Procédé selon la revendication 8, **caractérisé en ce que**, pour le réglage de l'amortissement ou de l'absorption du mouvement de percussion ou de vibration, l'élément de jonction élastique ou en caoutchouc présente différentes duretés Shore, résultant par exemple du choix entre différents polymères élastomères ou du choix entre des matériaux caoutchouteux appropriés et/ou différents degrés de réticulation ou de vulcanisation.

10. Procédé destiné à la fabrication d'un raccord antivibratoire selon l'une des revendications 1 à 8, **caractérisé en ce que** l'élément de jonction (19) élastique est réalisé entre les deux tronçons par coulée, injection, extrusion d'un matériau élastique ou d'aspect caoutchouteux entre les deux tronçons et, le cas échéant, le matériau est soumis ensuite à une réticulation réactive.
